# EUROPEAN PATENT SPECIFICATION

(11) **EP 0 908 021 B1**
(45) Date of publication and mention of the grant of the patent: **05.06.2002**
(21) Application number: 97930175.1
(22) Date of filing: 23.06.1997
(51) Int. Cl.: H04B 7/005, H04B 7/26, H04B 1/707

(54) **A METHOD AND NETWORK OF CONTROLLING INITIAL POWER RAMP-UP IN CDMA SYSTEMS BY USING SHORT CODES**
EIN VERFAHREN UND NETZWERK ZUM KONTROLLIEREN DES HOCHFAHRENS DER ANFANGSSENDELEISTUNG IN EINEM CDMA SYSTEM UNTER VERWENDUNG KURZER KODES
UTILISATION DE CODES COURTS POUR LINEARISER LA MONTEE EN PUISSANCE INITIALE DES SYSTEMES AMDC

(30) Priority: 27.06.1996 US 670162; 27.06.1996 US 671068
(43) Date of publication of application: 14.04.1999
(60) Divisional application: 00111007.1
(73) Proprietor: INTERDIGITAL TECHNOLOGY CORPORATION, Wilmington, DE 19801 (US)
(72) Inventor: OZLUTURK, Fatih, M., Port Washington, NY 11050 (US); LOMP, Gary, R., Centerport, NJ 11721 (US); HAIM, John, W., Baldwin, NY 11510 (US)
(74) Representative: Frohwitter, Bernhard, Dipl.-Ing.
(86) International application number: US9710754
(87) International publication number: WO9750194

(56) References cited:
- EP-A- 0 565 507
- PATENT ABSTRACTS OF JAPAN vol. 015, no. 003 (E-1019), 7 January 1991 & JP 02 256331 A (SHARP CORP), 17 October 1990,

## Description

### BACKGROUND OF THE INVENTION

### Field of the Invention

The present invention relates generally to CDMA communication systems. More specifically, the present invention relates to initial power ramp-up in a CDMA communication system.

### Description of Related Art

The use of wireless telecommunication systems has grown dramatically in the last decade as the reliability and capacity of the systems have improved. Wireless communication systems are being utilized in a variety of applications where land line based systems are impractical or impossible to use. Applications of wireless communications include cellular phone communications, communications in remote locations, and temporary communications for disaster recovery. Wireless communication systems have also become an economically viable alternative to replacing aging telephone lines and outdated telephone equipment.

The portion of the RF spectrum available for use by wireless communication systems is a critical resource. The RF spectrum must be shared among all commercial, governmental and military applications. There is a constant desire to improve the efficiency of wireless communication systems in order to increase system capacity.

Code division multiple access (CDMA) wireless communication systems have shown particular promise in this area. Although more traditional time division multiple access (TDMA) and frequency division multiple access (FDMA) systems have improved using the latest technological advances, CDMA systems, in particular Broadband Code Division Multiple Access™ (B-CDMA™) systems, have significant advantages over TDMA and FDMA systems. This efficiency is due to the improved coding and modulation density, interference rejection and multipath tolerance of B-CDMA™ systems, as well as reuse of the same spectrum in every communication cell. The format of CDMA communication signals also makes it extremely difficult to intercept calls, thereby ensuring greater privacy for callers and providing greater immunity against fraud.

In a CDMA system, the same portion of the frequency spectrum is used for communication by all subscriber units. Each subscriber unit's baseband data signal is multiplied by a code sequence, called the "spreading code", which has a much higher rate than the data. The ratio of the spreading code rate to the data symbol rate is called the "spreading factor" or the "processing gain". This coding results in a much wider transmission spectrum than the spectrum of the baseband data signal, hence the technique is called "spread spectrum". Subscriber units and their communications can be discriminated by assigning a unique spreading code to each communication link which is called a CDMA channel. Since all communications are sent over the same frequency band, each CDMA communication overlaps communications from other subscriber units and noise-related signals in both frequency and time.

The use of the same frequency spectrum by a plurality of subscriber units increases the efficiency of the system. However, it also causes a gradual degradation of the performance of the system as the number of users increase. Each subscriber unit detects communication signals with its unique spreading code as valid signals and all other signals are viewed as noise. The stronger the signal from a subscriber unit arrives at the base station, the more interference the base station experiences when receiving and demodulating signals from other subscriber units. Ultimately, the power from one subscriber unit may be great enough to terminate communications of other subscriber units. Accordingly, it is extremely important in wireless CDMA communication systems to control the transmission power of all subscriber units. This is best accomplished by using a closed loop power control algorithm once a communication link is established.

The control of transmission power is particularly critical when a subscriber unit is attempting to initiate communications with a base station and a power control loop has not yet been established. Typically, the transmission power required from a subscriber unit changes continuously as a function of the propagation loss, interference from other subscribers, channel noise, fading and other channel characteristics. Therefore, a subscriber unit does not know the power level at which it should start transmitting. If the subscriber unit begins transmitting at a power level that is too high, it may interfere with the communications of other subscriber units and may even terminate the communications of other subscriber units. If the initial transmission power level is too low, the subscriber unit will not be detected by the base station and a communication link will not be established.

There are many methods for controlling transmission power in a CDMA communication system. For example, U.S. Patent No. 5,056,109 (Gilhousen et al.) discloses a transmission power control system wherein the transmission power of the subscriber unit is based upon periodic signal measurements from both the subscriber unit and the base station. The base station transmits a pilot signal to all subscriber units which analyze the received pilot signal, estimate the power loss in the transmitted signal and adjust their transmission power accordingly. Each subscriber unit includes a non-linear loss output filter which prevents sudden increases in power which would cause interference to other subscriber units. This method is too complex to permit a base station to quickly acquire a subscriber unit while limiting the interference to other subscriber units. In addition, the propagation losses, interference and noise levels experienced in a forward link (transmission from the base station to a subscriber unit) is often not the same as in a reverse link (transmission from a subscriber unit to the base station). Reverse link power estimates based on forward link losses are not precise.

Many other types of prior art transmission power control systems require complex control signaling between communicating units or preselected transmission values to control transmission power. These power control techniques are inflexible and often impractical to implement.

Additionally, EP 0 565 507 A2 discloses a system for minimizing interference between two radio stations at the initiation of radio communications. A mobile station initiates a low level access signal and incrementally increases the transmission power level until the base station detects the signal. Once detected, the power level of the message is maintained at the detected level so that the signal interference is avoided. EP 0 565 507 A2 also discloses a method for synchronizing random access communications between mobile stations and the base station despite the variations in the distance between them.

Accordingly, there is a need for an efficient method of controlling the initial ramp-up of transmission power by subscriber units in a wireless CDMA communication system.

### SUMMARY OF THE INVENTION

The invention provides a method for controlling transmission power according to claim 1 and a network including a system for initial power control according to claim 15. Further aspects of the invention according to the dependent claims are provided.

The present invention comprises a novel method of controlling transmission power during the establishment of a channel in a CDMA communication system by utilizing the transmission of a short code from a subscriber unit to a base station during initial power ramp-up. The short code is a sequence for detection by the base station which has a much shorter period than a conventional spreading code. The ramp-up starts from a power level that is guaranteed to be lower than the required power level for detection by the base station. The subscriber unit quickly increases transmission power while repeatedly transmitting the short code until the signal is detected by the base station. Once the base station detects the short code, it sends an indication to the subscriber unit to cease increasing transmission power. The use of short codes limits power overshoot and interference to other subscriber stations and permits the base station to quickly synchronize to the spreading code used by the subscriber unit.

Accordingly, it is an object of the present invention to provide an improved technique for controlling power ramp-up during establishment of a communication channel between a CDMA subscriber unit and base station.

Other objects and advantages of the present invention will become apparent after reading the description of a presently preferred embodiment.

### BRIEF DESCRIPTION OF THE DRAWINGS

**Figure 1** is a schematic overview of a code division multiple access communication system in accordance with the present invention;
**Figure 2** is a diagram showing the operating range of a base station;
**Figure 3** is a timing diagram of communication signals between a base station and a subscriber unit;
**Figure 4** is a flow diagram of the establishment of a communication channel between a base station and a subscriber unit;
**Figure 5** is a graph of the transmission power output from a subscriber unit;
**Figures 6A and 6B** are flow diagrams of the establishment of a communication channel between a base station and a subscriber unit in accordance with the preferred embodiment of the present invention using short codes;
**Figure 7** is a graph of the transmission power output from a subscriber unit using short codes;
**Figure 8** shows the adaptive selection of short codes;
**Figure 9** is a block diagram of a base station in accordance with the present invention;
**Figure 10** is a block diagram of the subscriber unit in accordance with the present invention;
**Figures 11A and 11B** are flow diagrams of the ramp-up procedure implemented in accordance with the present invention; and

### DETAILED DESCRIPTION OF THE PREFERRED EMBODIMENT

The preferred embodiment will be described with reference to the drawing figures where identical numerals represent similar elements throughout.

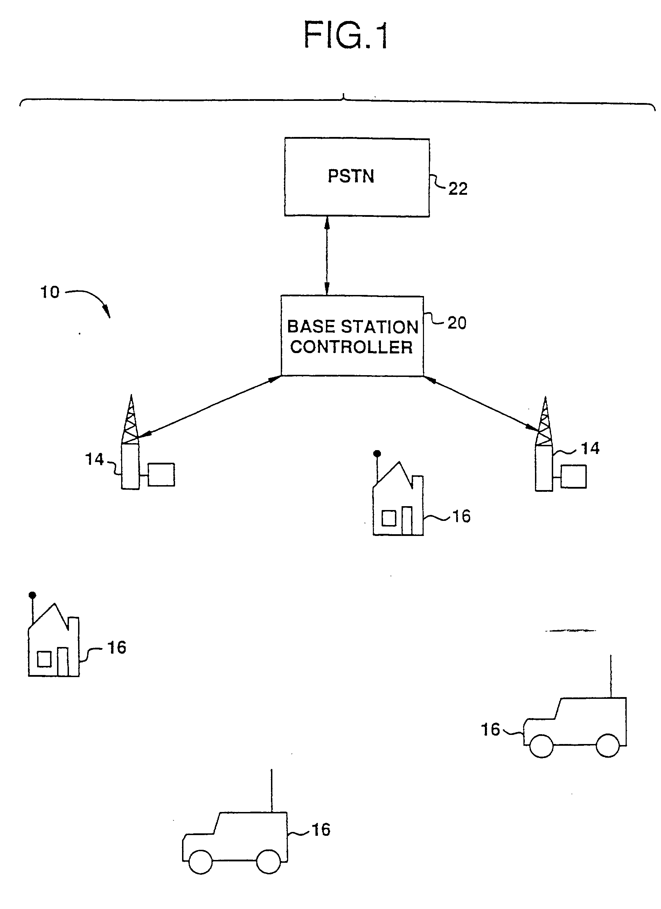

A communication network **10** embodying the present invention is shown in **Figure 1**. The communication network **10** generally comprises one or more base stations **14**, each of which is in wireless communication with a plurality of subscriber units **16**, which may be fixed or mobile. Each subscriber unit **16** communicates with either the closest base station **14** or the base station **14** which provides the strongest communication signal. The base stations **14** also communicate with a base station controller **20,** which coordinates communications among base stations **14**. The communication network **10** may also be connected to a public switched telephone network (PSTN) **22**, wherein the base station controller **20** also coordinates communications between the base stations **14** and the PSTN **22.** Preferably, each base station **14** communicates with the base station controller **20** over a wireless link, although a land line may also be provided. A land line is particularly applicable when a base station **14** is in close proximity to the base station controller **20**.

The base station controller **20** performs several functions. Primarily, the base station controller **20** provides all of the operations, administrative and maintenance (OA&M) signaling associated with establishing and maintaining all of the wireless communications between the subscriber units **16**, the base stations **14**, and the base station controller **20**. The base station controller **20** also provides an interface between the wireless communication system **10** and the PSTN **22**. This interface includes multiplexing and demultiplexing of the communication signals that enter and leave the system **10** via the base station controller **20**. Although the wireless communication system **10** is shown employing antennas to transmit RF signals, one skilled in the art should recognize that communications may be accomplished via microwave or satellite uplinks. Additionally, the functions of the base station controller **20** may be combined with a base station **14** to form a "master base station".

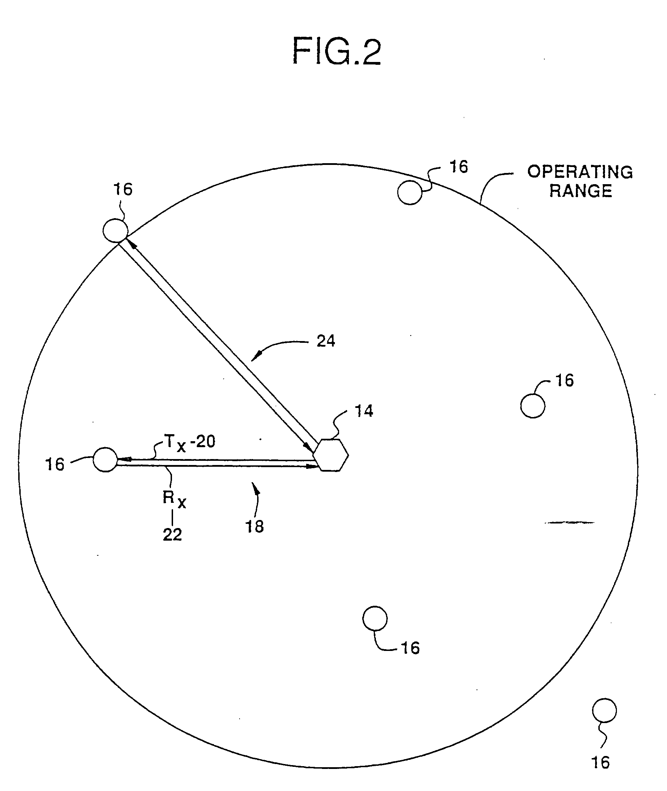

Referring to **Figure 2**, the propagation of signals between a base station **14** and a plurality of subscriber units **16** is shown. A two-way communication channel (link) **18** comprises a signal transmitted **20** (Tx) from the base station **14** to the subscriber unit **16** and a signal received 22 (Rx) by the base station **14** from the subscriber unit **16**. The Tx signal **20** is transmitted from the base station **14** and is received by the subscriber unit **16** after a propagation delay Δt. Similarly, the Rx **22** signal originates at the subscriber unit **16** and terminates at the base station **14** after a further propagation delay Δt. Accordingly, the round trip propagation delay is 2Δt. In the preferred embodiment, the base station **14** has an operating range of approximately 30 kilometers. The round trip propagation delay **24** associated with a subscriber unit **16** at the maximum operating range is 200 microseconds.

It should be apparent to those of skill in the art that the establishment of a communication channel between a base station and a subscriber unit is a complex procedure involving many tasks performed by the base station **14** and the subscriber unit 16 which are outside the scope of the present invention. The present invention is directed to initial power ramp-up and synchronization during the establishment of a communication channel.

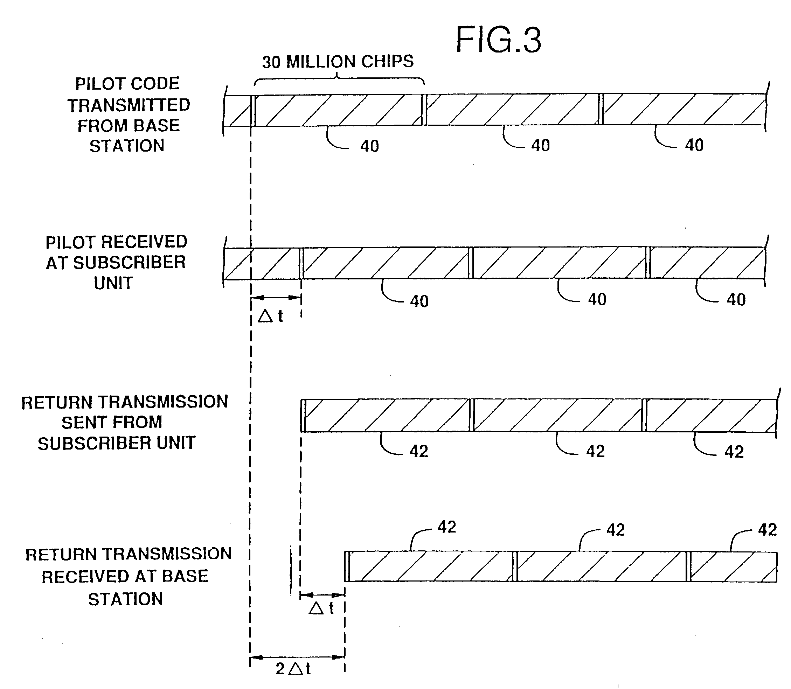

Referring to **Figure 3**, the signaling between a base station **14** and a subscriber unit **16** is shown. In accordance with the present invention, the base station **14** continuously transmits a pilot code **40** to all of the subscriber units **16** located within the transmitting range of the base station **14**. The pilot code **40** is a spreading code which carries no data bits. The pilot code **40** is used for subscriber unit **16** acquisition and synchronization, as well as for determining the parameters of the adaptive matched filter used in the receiver.

The subscriber unit **16** must acquire the pilot code **40** transmitted by the base station **14** before it can receive or transmit any data. Acquisition is the process whereby the subscriber unit **16** aligns its locally generated spreading code with the received pilot code **40**. The subscriber unit **16** searches through all of the possible phases of the received pilot code **40** until it detects the correct phase, (the beginning of the pilot code **40**).

The subscriber unit **16** then synchronizes its transmit spreading code to the received pilot code **40** by aligning the beginning of its transmit spreading code to the beginning of the pilot code **40**. One implication of this receive and transmit synchronization is that the subscriber unit **16** introduces no additional delay as far as the phase of the spreading codes are concerned. Accordingly, as shown in **Figure 3**, the relative delay between the pilot code **40** transmitted from the base station **14** and the subscriber unit's transmit spreading code **42** received at the base station **14** is 2Δt, which is solely due to the round trip propagation delay.

In the preferred embodiment, the pilot code is 29,877,120 chips in length and takes approximately 2 to 5 seconds to transmit, depending on the spreading factor. The length of the pilot code **40** was chosen to be a multiple of the data symbol no matter what kind of data rate or bandwidth is used. As is well known by those of skill in the art, a longer pilot code **40** has better randomness properties and the frequency response of the pilot code **40** is more uniform. Additionally, a longer pilot code **40** provides low channel cross correlation, thus increasing the capacity of the system **10** to support more subscriber units **16** with less interference. The use of a long pilot code **40** also supports a greater number of random short codes. For synchronization purposes, the pilot code **40** is chosen to have the same period as all of the other spreading codes used by the system **10**. Thus, once a subscriber unit **16** acquires the pilot code **40,** it is synchronized to all other signals transmitted from the base station **14.**

During idle periods, when a call is not in progress or pending, the subscriber unit **16** remains synchronized to the base station **14** by periodically reacquiring the pilot code **40**. This is necessary for the subscriber unit **16** to receive and demodulate any downlink transmissions, in particular paging messages which indicate incoming calls.

When a communication link is desired, the base station **14** must acquire the signal transmitted from the subscriber unit **16** before it can demodulate the data. The subscriber unit **16** must transmit an uplink signal for acquisition by the base station **14** to begin establishing the two-way communication link. A critical parameter in this procedure is the transmission power level of the subscriber unit **16**. A transmission power level that is too high can impair communications in the whole service area, whereas a transmission power level that is too low can prevent the base station **14** from detecting the uplink signal.

In a first embodiment of the present invention the subscriber unit **16** starts transmitting at a power level guaranteed to be lower than what is required and increases transmission power output until the correct power level is achieved. This avoids sudden introduction of a strong interference, hence improving system **10** capacity.

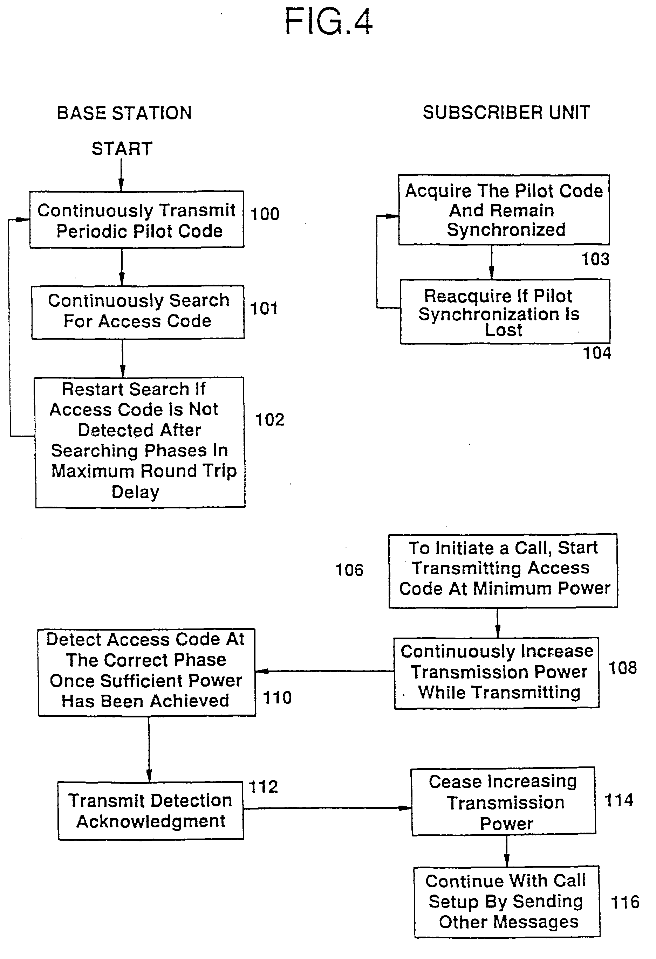

The establishment of a communication channel and the tasks performed by the base station **14** and a subscriber unit **16** are shown in **Figure 4**. Although many subscriber units **16** may be located within the operating range of the base station **14**, reference will be made hereinafter to a single subscriber unit **16** for simplicity in explaining the operation of the present invention.

The base station **14** begins by continuously transmitting a periodic pilot code **40** to all subscriber units **16** located within the operating range of the base station **14 (step 100)**. As the base station **14** transmits the pilot code **40 (step 100)**, the base station **14** searches **(step 101)** for an "access code" **42** transmitted by a subscriber unit **16**. The access code **42** is a known spreading code transmitted from a subscriber unit **16** to the base station **14** during initiation of communications and power ramp-up. The base station **14** must search through all possible phases (time shifts) of the access code **42** transmitted from the subscriber unit **16** in order to find the correct phase. This is called the "acquisition" or the "detection" process **(step 101)**. The longer the access code **42**, the longer it takes for the base station **14** to search through the phases and acquire the correct phase.

As previously explained, the relative delay between signals transmitted from the base station **14** and return signals received at the base station **14** corresponds to the round trip propagation delay 2Δt. The maximum delay occurs at the maximum operating range of the base station **14**, known as the cell boundary. Accordingly, the base station **14** must search up to as many code phases as there are in the maximum round trip propagation delay, which is typically less code phases than there are in a code period.

For a data rate Rb and spreading code rate Rc, the ratio L = Rc/Rb is called the spreading factor or the processing gain. In the preferred embodiment of the present invention, the cell boundary radius is 30 km, which corresponds to approximately between 1000 and 2500 code phases in the maximum round trip delay, depending on the processing gain.

If the base station **14** has not detected the access code after searching through the code phases corresponding to the maximum round trip delay the search is repeated starting from the phase of the pilot code **40** which corresponds to zero delay **(step 102)**.

During idle periods, the pilot code **40** from the base station **14** is received at the subscriber unit **16** which periodically synchronizes its transmit spreading code generator thereto **(step 103)**. If synchronization with the pilot code **40** is lost, the subscriber unit **16** reacquires the pilot code **40** and resynchronizes **(step 104)**.

When it is desired to initiate a communication link, the subscriber unit **16** starts transmitting the access code **42** back to the base station **14 (step 106)**. The subscriber unit **16** continuously increases the transmission power while retransmitting the access code **42 (step 108)** until it receives an acknowledgment from the base station **14**. The base station **14** detects the access code **42** at the correct phase once the minimum power level for reception has been achieved **(step 110)**. The base station **14** subsequently transmits an access code detection acknowledgment signal **(step 112)** to the subscriber unit **16.** Upon receiving the acknowledgment, the subscriber unit ceases the transmission power increase **(step 114)**. With the power ramp-up completed, closed loop power control and call setup signaling is performed **(step 116)** to establish the two-way communication link.

Although this embodiment limits subscriber unit **16** transmission power, acquisition of the subscriber unit **16** by the base station **14** in this manner may lead to unnecessary power overshoot from the subscriber unit **16**, thereby reducing the performance of the system **10**.

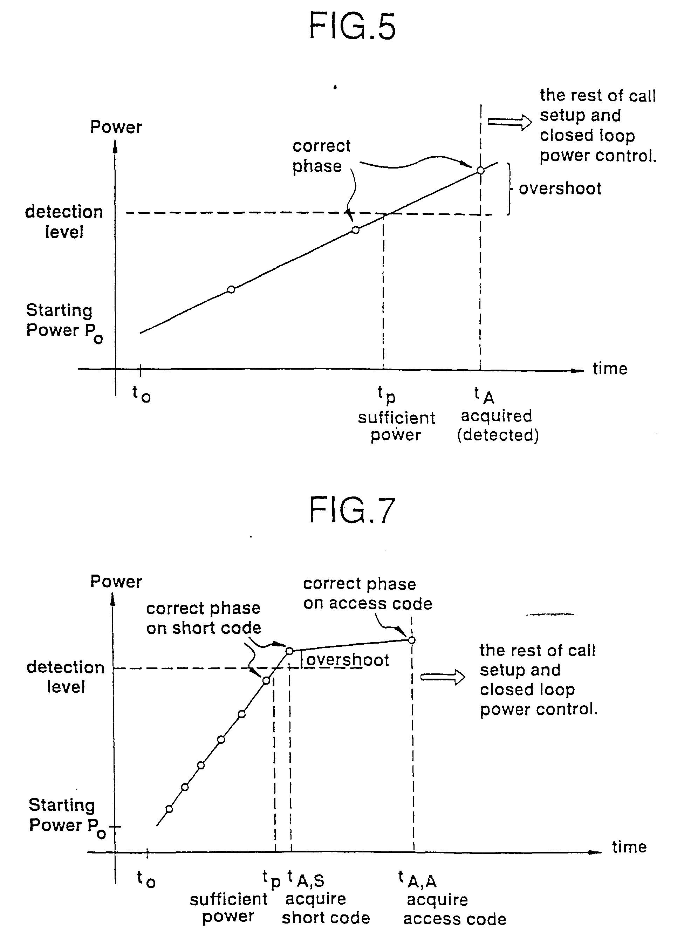

The transmission power output profile of the subscriber unit **16** is shown in **Figure 5.** At t₀, the subscriber unit **16** starts transmitting at the starting transmission power level P₀, which is a power level guaranteed to be less than the power level required for detection by the base station **14.** The subscriber unit **16** continually increases the transmission power level until it receives the detection indication from the base station **14**. For the base station **14** to properly detect the access code **42** from the subscriber unit **16** the access code **42** must: 1) be received at a sufficient power level; and 2) be detected at the proper phase. Accordingly, referring to Figure 5, although the access code **42** is at a sufficient power level for detection by the base station 14 at tₚ, the base station **14** must continue searching for the correct phase of the access code **42** which occurs at t_{A}.

Since the subscriber unit **16** continues to increase the output transmission power level until it receives the detection indication from the base station **14**, the transmission power of the access code **42** exceeds the power level required for detection by the base station **14**. This causes unnecessary interference to all other subscriber units **16**. If the power overshoot is too large, the interference to other subscriber units **16** may be so severe as to terminate ongoing communications of other subscriber units **16**.

The rate that the subscriber unit **16** increases transmission power to avoid overshoot may be reduced, however, this results in a longer call setup time. Those of skill in the art would appreciate that adaptive ramp-up rates can also be used, yet these rates have shortcomings and will not appreciably eliminate power overshoot in all situations.

The preferred embodiment of the present invention utilizes "short codes" and a two-stage communication link establishment procedure to achieve fast power ramp-up without large power overshoots. The spreading code transmitted by the subscriber unit **16** is much shorter than the rest of the spreading codes (hence the term short code), so that the number of phases is limited and the base station **14** can quickly search through the code. The short code used for this purpose carries no data.

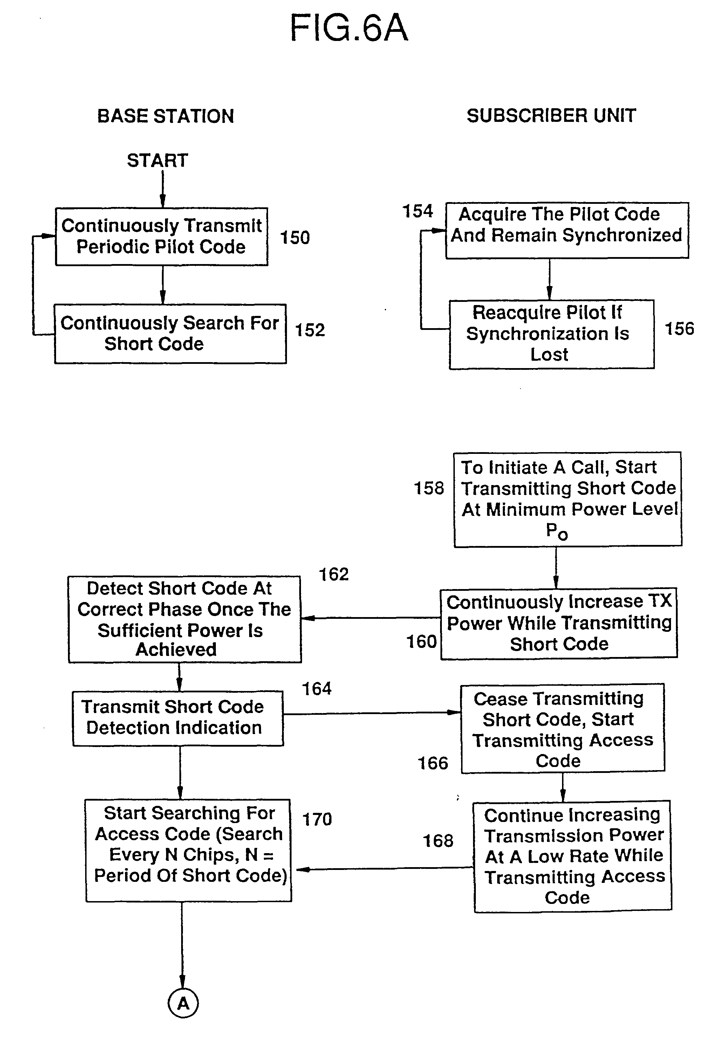

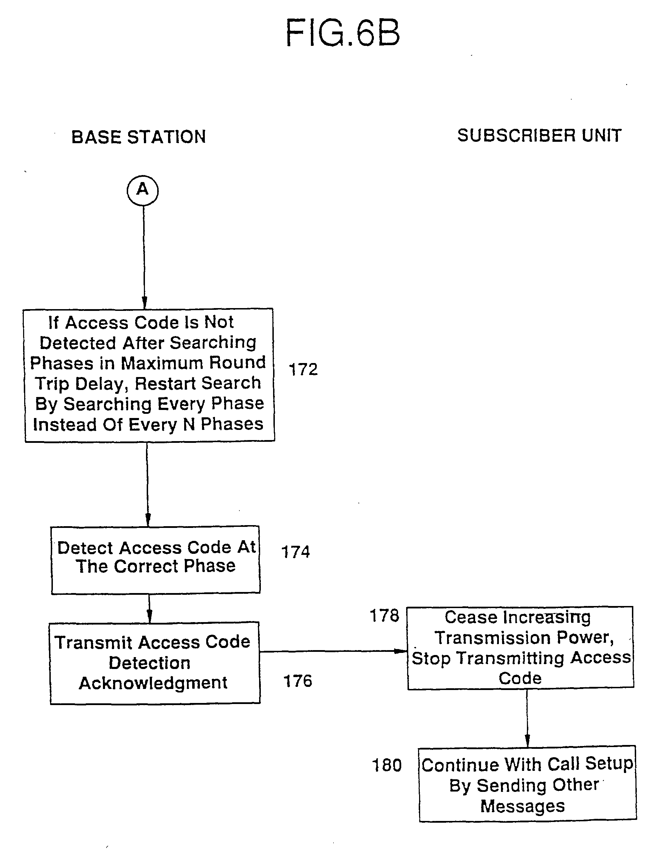

The tasks performed by the base station **14** and the subscriber unit 16 to establish a communication channel using short codes in accordance with the preferred embodiment of the present invention are shown in **Figures 6A** and **6B**. During idle periods, the base station **14** periodically and continuously transmits the pilot code to all subscriber units **16** located within the operating range of the base station **14 (step 150)**. The base station **14** also continuously searches for a short code transmitted by the subscriber unit **16 (step 152)**. The subscriber unit **16** acquires the pilot code and synchronizes its transmit spreading code generator to the pilot code. The subscriber unit **16** also periodically checks to ensure it is synchronized. If synchronization is lost, the subscriber unit **16** reacquires the pilot signal transmitted by the base station **(step 156)**.

When a communication link is desired, the subscriber unit **16** starts transmitting a short code at the minimum power level P₀ **(step 158)** and continuously increases the transmission power level while retransmitting the short code **(step 160)** until it receives an acknowledgment from the base station **14** that the short code has been detected by the base station **14**.

The access code in the preferred embodiment, as previously described herein, is approximately 30 million chips in length. However, the short code is much smaller. The short code can be chosen to be any length that is sufficiently short to permit quick detection. There is an advantage in choosing a short code length such that it divides the access code period evenly. For the access code described herein, the short code is preferably chosen to be 32, 64 or 128 chips in length. Alternatively, the short code may be as short as one symbol length, as will be described in detail hereinafter.

Since the start of the short code and the start of the access code are synchronized, once the base station **14** acquires the short code, the base station **14** knows that the corresponding phase of the access code is an integer multiple of N chips from the phase of the short code where N is the length of the short code. Accordingly, the base station **14** does not have to search all possible phases corresponding to the maximum round trip propagation delay.

Using the short code, the correct phase for detection by the base station **14** occurs much more frequently. When the minimum power level for reception has been achieved, the short code is quickly detected **(step 162)** and the transmission power overshoot is limited. The transmission power ramp-up rate may be significantly increased without concern for a large power overshoot. In the preferred embodiment of the present invention, the power ramp-up rate using the short code is 1 dB per millisecond.

The base station **14** subsequently transmits a short code detection indication signal **(step 164)** to the subscriber unit **16** which enters the second stage of the power ramp-up upon receiving this indication. In this stage, the subscriber unit **16** ceases transmitting the short code **(step 166)** and starts continuously transmitting a periodic access code **(step 166)**. The subscriber unit **16** continues to ramp-up its transmission power while transmitting the access code, however the ramp-up rate is now much lower than the previous ramp-up rate used with the short code **(step 168)**. The ramp-up rate with the access code is preferably 0.05 dB per millisecond. The slow ramp-up avoids losing synchronization with the base station **14** due to small changes in channel propagation characteristics.

At this point, the base station **14** has detected the short code at the proper phase and power level **(step 162)**. The base station **14** must now synchronize to the access code which is the same length as all other spreading codes and much longer than the short code. Utilizing the short code, the base station **14** is able to detect the proper phase of the access code much more quickly. The base station 14 begins searching for the proper phase of the access code **(step 170)**. However, since the start of the access code is synchronized with the start of the short code, the base station **14** is only required to search every N chips; where N = the length of the short code. In summary, the base station **14** quickly acquires the access code of the proper phase and power level by: 1) detecting the short code; and 2) determining the proper phase of the access code by searching every N chips of the access code from the beginning of the short code.

If the proper phase of the access code has not been detected after searching the number of phases in the maximum round trip delay the base station **14** restarts the search for the access code by searching every chip instead of every N chips **(step 172)**. When the proper phase of the access code has been detected **(step 174)** the base station **14** transmits an access code detection acknowledgment **(step 176)** to the subscriber unit **16** which ceases the transmission power increase **(step 178)** upon receiving this acknowledgment. With the power ramp-up completed, closed loop power control and call setup signaling is performed **(step 180)** to establish the two-way communication link.

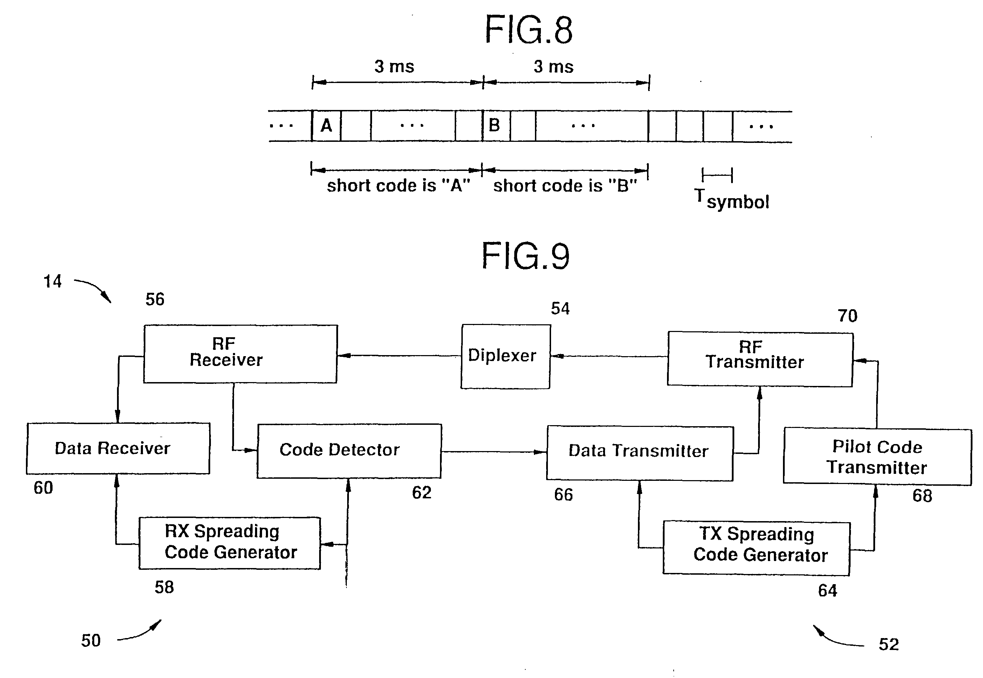

Referring to **Figure 7**, although the starting power level P₀ is the same as in the prior embodiment, the subscriber unit 16 may ramp-up the transmission power level at a much higher rate by using a short code. The short code is quickly detected after the transmission power level surpasses the minimum detection level, thus minimizing the amount of transmission power overshoot.

Although the same short code may be reused by the subscriber unit **16**, in the preferred embodiment of the present invention the short codes are dynamically selected and updated in accordance with the following procedure. Referring to **Figure 8**, the period of the short code is equal to one symbol length and the start of each period is aligned with a symbol boundary. The short codes are generated from a regular length spreading code. A symbol length portion from the beginning of the spreading code is stored and used as the short code for the next 3 milliseconds. Every 3 milliseconds, a new symbol length portion of the spreading code replaces the old short code. Since the spreading code period is an integer multiple of 3 milliseconds, the same short codes are repeated once every period of the spreading code. Periodic updating of the short code averages the interference created by the short code over the entire spectrum.

A block diagram of the base station **14** is shown in Figure **9**. Briefly described, the base station **14** comprises a receiver section **50**, a transmitter section **52** and a diplexer **54**. An RF receiver **56** receives and down-converts the RF signal received from the diplexer **54**. The receive spreading code generator **58** outputs a spreading code to both the data receiver **60** and the code detector **62**. In the data receiver **60**, the spreading code is correlated with the baseband signal to extract the data signal which is forwarded for further processing. The received baseband signal is also forwarded to the code detector **62** which detects the access code or the short code from the subscriber unit **16** and adjusts the timing of the spreading code generator **58** to establish a communication channel **18**.

In the transmitter section **52** of the base station **14**, the transmit spreading code generator **64** outputs a spreading code to the data transmitter **66** and the pilot code transmitter **68**. The pilot code transmitter **68** continuously transmits the periodic pilot code. The data transmitter 66 transmits the short code detect indication and access code detect acknowledgment after the code detector **62** has detected the short code or the access code respectively. The data transmitter also sends other message and data signals. The signals from the data transmitter **66** and the pilot code transmitter **68** are combined and up-converted by the RF transmitter **70** for transmission to the subscriber units **16**.

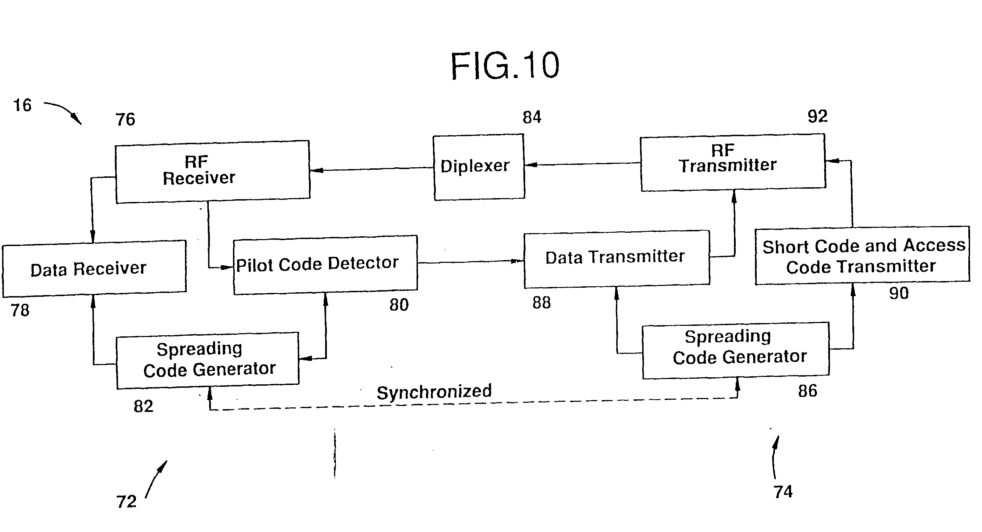

A block diagram of the subscriber unit **16** is shown in **Figure 10**. Briefly described, the subscriber unit **16** comprises a receiver section **72,** a transmitter section **74** and a diplexer **84**. An RF receiver **76** receives and down-converts the RF signal received from the diplexer **84**. A pilot code detector **80** correlates the spreading code with the baseband signal to acquire the pilot code transmitted by the base station **16**. In this manner, the pilot code detector **80** maintains synchronization with the pilot code. The receiver spreading code generator **82** generates and outputs a spreading code to the data receiver **78** and the pilot code detector **80**. The data receiver **78** correlates the spreading code with the baseband signal to process the short code detect indication and the access code detect acknowledgment transmitted by the base station **16**.

The transmitter section **74** comprises a spreading code generator **86** which generates and outputs spreading codes to a data transmitter **88** and a short code and access code transmitter **90**. The short code and access code transmitter **90** transmits these codes at different stages of the power ramp-up procedure as hereinbefore described. The signals output by the data transmitter **88** and the short code and access code transmitter **90** are combined and up-converted by the RF transmitter **92** for transmission to the base station **14.** The timing of the receiver spreading code generator **82** is adjusted by the pilot code detector **80** through the acquisition process. The receiver and transmitter spreading code generators **82, 86** are also synchronized.

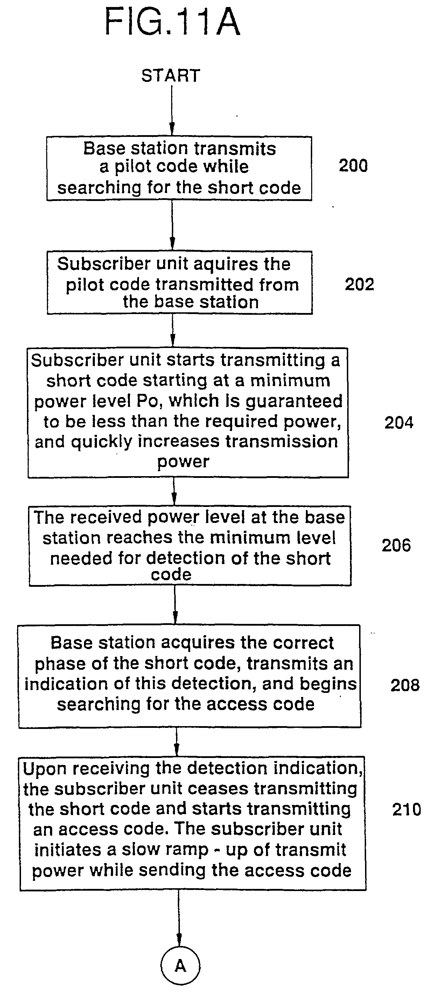

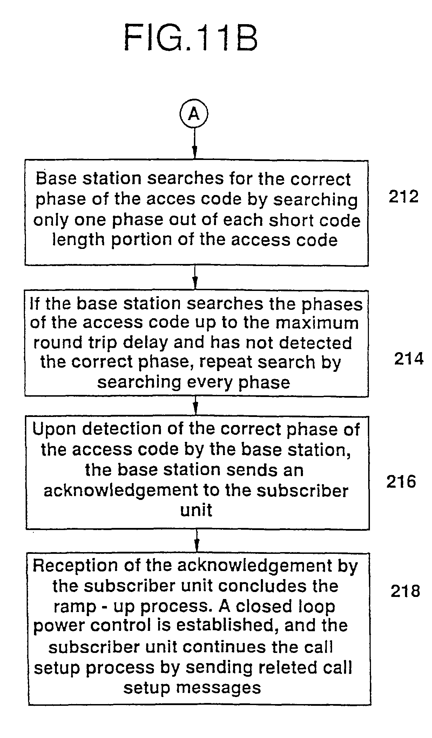

An overview of the ramp-up procedure in accordance with the preferred current invention is summarized in Figures **11A** and **11B**. The base station **14** transmits a pilot code while searching for the short code **(step 200)**. The subscriber unit **16** acquires the pilot code transmitted from the base station **14 (step 202)**, starts transmitting a short code starting at a minimum power level P₀ which is guaranteed to be less than the required power, and quickly increases transmission power **(step 204)**. Once the received power level at the base station **14** reaches the minimum level needed for detection of the short code **(step 206)** the base station **14** acquires the correct phase of the short code, transmits an indication of this detection, and begins searching for the access code **(step 208)**. Upon receiving the detection indication, the subscriber unit **16** ceases transmitting the short code and starts transmitting an access code. The subscriber unit **16** initiates a slow ramp-up of transmit power while sending the access code **(step 210)**. The base station **14** searches for the correct phase of the access code by searching only one phase out of each short code length portion of the access code **(step 212)**. If the base station **14** searches the phases of the access code up to the maximum round trip delay and has not detected the correct phase, the search is repeated by searching every phase **(step 214)**. Upon detection of the correct phase of the access code by the base station **14**, the base station **14** sends an acknowledgment to the subscriber unit **16 (step 216)**. Reception of the acknowledgment by the subscriber unit **16** concludes the ramp-up process. A closed loop power control is established, and the subscriber unit **16** continues the call setup process by sending related call setup messages **(step 218)**.

## Claims

1. A method for controlling transmission power during the establishment of communications between a base station (14) and at least one subscriber unit (16), the method **characterized by**:
transmitting a short code from said subscriber unit (16) at an initial predetermined power level (158);
increasing said power level at a predetermined first ramp-up rate (160);
detecting said short code at said base station (14) when a sufficient power for detection is achieved (162);
transmitting a signal from said base station (14) confirming that said short code has been detected (164);
receiving said confirmation signal at said subscriber unit (16);
ceasing the short code transmitting and transmitting an access code which is longer than said short code at a predetermined second ramp-up rate lower than said first rate when said confirmation signal is received (166);
detecting said access code at the base station (174) and transmitting an acknowledgment signal to said subscriber unit (176); and
in response to receiving the acknowledgment signal, ceasing increasing transmission power ramp-up at the second ramp-up rate (178).

2. The method of claim 1 **characterized by** said initial predetermined power level is lower than the power level required for detection by said base station (14).

3. The method of claim 2 **characterized by** said first rate is approximately 1.0dB/msec and said second rate is approximately 0.05dB/msec.

4. The method of claims 1-3 **characterized by** said short code being synchronized with a received pilot signal.

5. The method of claims 1-4 **characterized by** a period of said access code is an even multiple of a period of said short code.

6. The method of claims 1-5 **characterized by** a period of said short code being a single symbol length.

7. The method of claims 1-6 **characterized by** a start of said access code is synchronized with a start of said short code.

8. The method of claims 1-7 further **characterized by** detecting, by said base station (14), said access code and searching for the beginning of said access code.

9. The method of claims 1-8 **characterized by** said short and access codes comprise a plurality of chips and wherein said base station (14) searches every Nth chip of said access code; where N is the number of chips in said short code.

10. The method of claim 9 further **characterized by** ceasing, after a predetermined duration, the search of every Nth chip when the beginning of said access code has not been determined (172).

11. The method of claim 10 **characterized by** said predetermined duration is equivalent to the round trip delay of a signal sent to a subscriber unit (16) at the maximum operating range of the system.

12. The method of claims 10 and 11 further **characterized by** searching every chip of said access code after said predetermined duration.

13. The method of claim 11 **characterized by** said short code being a portion of said access code.

14. The method of claims 1-13 further **characterized by** detecting at said base station (14), the correct phase of said short code(162) when said short code achieves sufficient power for detection by said base station (14).

15. A network for communicating between a base station (14) and at least one subscriber unit (16), both said base station (14) and subscriber unit (16) having means for transmitting (50,72) and detecting (52,74) signals, the network including a system for initial power control **characterized by**:
said subscriber unit (16) comprising:
means (74) for selectively transmitting a short code at a selected transmission power level;
means (78) for detecting a confirmation signal from said base station (14); and
control means (74), responsive to said detecting means (78), for varying said transmission power level; wherein said control means (74) increases said transmission power level at a first rate prior to the receipt of a confirmation signal;
means (74) for ceasing the short code transmitting and transmitting an access code which is longer than said short code at a second rate lower than said first rate when said confirmation signal is received; and
means (78) for ceasing increasing transmission power ramp-up at the second ramp-up rate, in response to receiving an acknowledgment signal; and
said base station (14) comprising:
means for detecting (62) said short code;
means (66), responsive to said detecting means (62), for transmitting said confirmation signal to said subscriber unit (16) when said short code is detected; and
means (62) for detecting said access code and transmitting the acknowledgment signal.

16. The network of claim 15 **characterized by** said access code is initially transmitted at a power level lower than the power level required for detection by said base station (14).

17. The network of claims 15-16 **characterized by** said first rate is approximately 1.0dB/msec and said second rate is approximately 0.05dB/msec.

18. The network of claims 15-17 **characterized by** said short code being a portion of said access code.

19. The network of claims 15-18 **characterized by** the period of said access code is an even multiple of the period of said short code.

20. The network of claims 15-18 **characterized by** a start of said access code is synchronized with a start of said short code.

21. The network of claims 15-20 **characterized by** said base station detecting means (78) detects said access code and searches for the beginning of said access code.

22. The network of claims 15-21 **characterized by** said short code and access code comprise a plurality of chips and said base station detecting means (78) searches every Nth chip of said access code; where N is the number of chips in said short code.

23. The network of claim 22 **characterized by** said base station detecting means (78) ceases the search of every Nth chip, after a predetermined duration, when the beginning of said access code has not been determined.

24. The network of claim 23 **characterized by** said predetermined duration is equivalent to the round trip delay of a signal sent to a subscriber unit (16) at the maximum operating range of the system.

25. The network of claims 15-24 **characterized by** the base station (14) further including means (72) for detecting the correct phase of said short code when said access code achieves sufficient power for detection.

## Patentansprüche

1. Verfahren zum Kontrollieren von Übertragungsleistung während der Errichtung von Kommunikationsverbindungen zwischen einer Basisstation (14) und mindestens einer Teilnehmereinheit (16), das Verfahren **gekennzeichnet durch** folgende Schritte:
Übertragen eines Kurzkodes von der Teilnehmereinheit (16) auf einem anfänglich vorbestimmten Leistungsniveau (158);
Steigern des Leistungsniveaus mit einer vorbestimmten ersten Steigerungsrate (160);
Detektieren des Kurzkodes an der Basisstation (14), wenn eine ausreichende Leistung zum Detektieren erreicht ist (162);
Übertragen eines Signals von der Basisstation (14), welches bestätigt, daß der Kurzkode ermittelt wurde (164);
Empfangen des Bestätigungssignals an der Teilnehmereinheit (16);
Unterbrechen das Übertragen des Kurzkodes und das Übertragen eines Zugriffkodes, wobei der Zugriffskode länger als der Kurzkode ist, mit einer vorbestimmten zweiten Steigerungsrate, die niedriger als die erste Rate ist, wenn das Bestätigungssignal empfangen ist (166);
Detektieren des Zugriffskodes an der Basisstation (174) und das Übertragen eines Empfangsbestätigungssignals an die Teilnehmereinheit (176); und
als Reaktion auf Empfang des Empfangsbestätigungssignals, Unterbrechen der Steigerung der Übertragungsleistungssteigerung auf der zweiten Steigerungsrate (178).

2. Verfahren nach Anspruch 1, **dadurch gekennzeichnet, daß** das anfänglich vorbestimmte Leistungsniveau niedriger als das zum Detektieren durch die Basisstation (14) notwendige Leistunsgniveau ist.

3. Verfahren nach Anspruch 2, **dadurch gekennzeichnet, daß** die erste Rate ungefähr 1,0 dB/msec und die zweite Rate ungefähr 0,05 dB/msec betragen.

4. Verfahren nach einem der Ansprüche 1-3, **dadurch gekennzeichnet, daß** der Kurzkode mit einem empfangenen Pilotsignal synchronisiert ist.

5. Verfahren nach einem der Ansprüche 1 - 4, **dadurch gekennzeichnet, daß** das eine Periode des Zugriffskodes eine gerade Vielfache einer Periode des Kurzkodes ist.

6. Verfahren nach einem der Ansprüche 1-5, **dadurch gekennzeichnet, daß** eine Periode des Kurzkodes eine einzelne Symbollänge beträgt.

7. Verfahren nach einem der Ansprüche 1-6, **dadurch gekennzeichnet, daß** ein Anfang des Zugriffskodes mit einem Anfang des Kurzkodes synchronisiert ist.

8. Verfahren nach einem der Ansprüche 1-7, **dadurch gekennzeichnet, daß** die Basisstation (14) den Zugriffskode detektiert und nach dem Anfang des Zugriffskodes sucht.

9. Verfahren nach einem der Ansprüche 1 - 8, **dadurch gekennzeichnet, daß** die Kurzund Zugriffskodes eine Mehrzahl von Fragmenten umfassen, wobei die Basisstation (14) nach jedem N-ten Fragment des Zugriffskodes sucht, wobei N die Zahl von Fragmenten im Kurzkode ist.

10. Verfahren nach Anspruch 9, **dadurch gekennzeichnet, daß** nach einer vorbestimmten Dauer ein Aufhören der Suche nach jedem N-ten Fragment stattfindet, wenn der Anfang des Zugriffskodes nicht ermittelt wurde (172).

11. Verfahren nach Anspruch 10, **dadurch gekennzeichnet, daß** die vorbestimmte Dauer der Rundgangverzögerung eines an eine Teilnehmereinheit (16) mit der maximalen Einsatzentfernung des Systems gesendeten Signals äquivalent ist.

12. Verfahren nach Ansprüchen 10 und 11, **dadurch gekennzeichnet, daß** das Suchen nach jedem Fragment des Zugriffskodes nach der genannten vorbestimmten Dauer erfolgt.

13. Verfahren nach Anspruch 11, **dadurch gekennzeichnet, daß** der Kurzkode ein Teil des Zugriffskodes ist.

14. Verfahren nach einem der Ansprüche 1-13, **dadurch gekennzeichnet, daß** ein Detektieren der korrekten Phase des Kurzkodes (162) an der Basisstation (14) erfolgt, wenn der Kurzkode eine ausreichende Leistung zum Detektieren durch die Basisstation (14) erreicht.

15. Ein Netzwerk zum Kommunizieren zwischen einer Basisstation (14) und mindestens einer Teilnehmereinheit (16), wobei sowohl die Basisstation (14) als auch die Teilnehmereinheit (16) Mittel zum Übertragen (50, 72) und zum Detektieren (52, 74) von Signalen aufweisen, das Netzwerk ein System zur anfänglichen Leistungskontrolle aufweist **gekennzeichnet durch**:
die Teilnehmereinheit (16) aufweist:
Mittel (74) zum selektiven Übertragen eines Kurzkodes auf einem ausgewählten Übertragungsleistungsniveau;
Mittel (78) zum Detektieren eines Bestätigungssignals von der Basisstation (14); und
Kontrollmittel (74), die auf die Detektierungsmittel (78) ansprechen, zum Variieren des Übertragungsleistungsniveaus, wobei die Kontrollmittel (74) das Übertragungsleistungsniveau vor dem Empfang eines Bestätigungssignals mit einer ersten Rate steigern;
Mittel (74) zum Unterbrechen der Übertragung des Kurzkodes und zum Übertragen eines Zugriffskodes, der länger als der Kurzkode ist, mit einer zweiten Rate, die niedriger als die erste Rate ist, wenn das Bestätigungssignal empfangen wurde; und
Mittel (78) zum Unterbrechen der Steigerung der Übertragungsleistungssteigerung bei der zweiten Steigerungsrate als Reaktion auf Empfang eines Empfangsbestätigungssignals; und
die Basisstation (14) umfaßt:
Mittel zum Detektieren (62) des Kurzkodes;
Mittel (66), die auf die Detektierungsmittel (62) ansprechen, zum Übertragen des Bestätigungssignals an die Teilnehmereinheit (16), wenn der Kurzkode detektiert ist; und
Mittel (62) zum Detektieren des Zugriffskodes und zum Übertragen des Empfangsbestätigungssignals.

16. Netzwerk nach Anspruch 15, **dadurch gekennzeichnet, daß** der Zugriffskode anfänglich auf einem Leistungsniveau übertragen wird, das niedriger als das zum Ermitteln durch die Basisstation (14) notwendige Leistungsniveau ist.

17. Netzwerk nach einem der Ansprüche 15-16, **dadurch gekennzeichnet, daß** die erste Rate ungefähr 1,0 dB/msec und die zweite Rate ungefähr 0,05 dB/msec beträgt.

18. Netzwerk nach einem der Ansprüche 15 - 17, **dadurch gekennzeichnet, daß** der Kurzkode ein Teil des Zugriffskodes ist.

19. Netzwerk nach einem der Ansprüche 15 - 18, **dadurch gekennzeichnet, daß** die Periode des Zugriffskodes eine gerade Vielfache der Periode des Kurzkodes ist.

20. Netzwerk nach einem der Ansprüche 15 - 18, **dadurch gekennzeichnet, daß** ein Anfang des Zugriffskodes mit einem Anfang des Kurzkodes synchronisiert ist.

21. Netzwerk nach einem der Ansprüche 15 - 20, **dadurch gekennzeichnet, daß** die Detektierungsmittel (78) der Basisstation den Zugriffskode detektieren und nach dem Anfang des Zugriffskodes suchen.

22. Netzwerk nach einem der Ansprüche 15 - 21, **dadurch gekennzeichnet, daß** der Kurzkode und der Zugriffskode eine Mehrzahl von Fragmenten umfassen, und die Detektierungsmittel (78) der Basisstation nach jedem N-ten Fragment des Zugriffskodes suchen, wobei N die Zahl der Fragmente in dem Kurzkode ist.

23. Netzwerk nach Anspruch 22, **dadurch gekennzeichnet, daß** nach einer vorbestimmten Dauer die Detektierungsmittel (78) der Basisstation die Suche nach jedem N-en Fragment unterbrechen, wenn der Anfang des Zugriffskodes nicht ermittelt wurde.

24. Netzwerk nach Anspruch 23, **dadurch gekennzeichnet, daß** die vorbestimmte Dauer der Rundgangverzögerung eines an eine Teilnehmereinheit (16) mit der maximalen Einsatzentfernung des Systems gesendeten Signals äquivalent ist.

25. Netzwerk nach einem der Ansprüche 15-24, **dadurch gekennzeichnet, daß** die Basisstation (14) des weiteren Mittel (72) zum Detektieren der korrekten Phase des Kurzkodes aufweist, wenn der Zugriffskode eine ausreichende Leistung zum Detektieren erreicht.

## Revendications

1. Procédé de commande de la puissance de transmission au cours de l'établissement de communications entre une station de base (14) et au moins une unité d'abonné (16), ce procédé étant **caractérisé par** :
l'émission d'un code court à partir de ladite unité d'abonné (16) à un niveau de puissance initial prédéterminé (158) ;
l'augmentation dudit niveau de puissance suivant une première vitesse d'élévation prédéterminée (160) ;
la détection dudit code court au niveau de ladite station de base (14) lorsqu'une puissance suffisante pour la détection est atteinte (162) ;
l'émission d'un signal à partir de ladite station de base (14) confirmant que ledit code court a été détecté (164) ;
la réception dudit signal de confirmation au niveau de ladite unité d'abonné (16) ;
l'arrêt de l'émission du code court et l'émission d'un code d'accès qui est plus long que ledit code court suivant une seconde vitesse d'élévation prédéterminée inférieure à ladite première vitesse lorsque ledit signal de confirmation est reçu (166) ;
la détection dudit code d'accès au niveau de la station de base (174) et l'émission d'un signal d'accusé de réception vers ladite unité d'abonné (176) ; et
en réponse à la réception du signal d'accusé de réception, l'arrêt de l'augmentation de l'élévation de la puissance d'émission suivant la seconde vitesse d'élévation (178).

2. Procédé selon la revendication 1 **caractérisé en ce que** ledit niveau de puissance initial prédéterminé est inférieur au niveau de puissance requis pour la détection par ladite station de base (14).

3. Procédé selon la revendication 2 **caractérisé en ce que** ladite première vitesse est égale à environ 1,0 dB/ms et **en ce que** ladite seconde vitesse est égale à environ 0,05 dB/ms.

4. Procédé selon les revendications 1 à 3 **caractérisé en ce que** ledit code court est synchronisé avec un signal pilote reçu.

5. Procédé selon les revendications 1 à 4, **caractérisé en ce qu'**une période dudit code d'accès est un multiple pair d'une période dudit corde court.

6. Procédé selon les revendications 1 à 5, **caractérisé en ce qu'**une période dudit code court est la longueur d'un seul symbole.

7. Procédé selon les revendications 1 à 6, **caractérisé en ce que** le début dudit code d'accès est synchronisé avec le début dudit code court.

8. Procédé selon les revendications 1 à 7 **caractérisé en outre par** la détection, par ladite station de base (14), dudit code d'accès et la recherche du début dudit code d'accès.

9. Procédé selon les revendications 1 à 8 **caractérisé en ce que** lesdits codes court et code d'accès comprennent une pluralité de puces et dans lequel ladite station de base (14) recherche chaque Nième puce dudit code d'accès ; et où N est le nombre de puces dans ledit code court.

10. Procédé selon la revendication 9 **caractérisé en outre par** l'arrêt, après une durée prédéterminée, de la recherche de chaque Nième puce lorsque le début dudit code d'accès n'a pas été déterminé (172).

11. Procédé selon la revendication 10 **caractérisé en ce que** la durée prédéterminée est équivalente au temps nécessaire à un aller-retour d'un signal envoyé à une unité d'abonné (16) dans la plage maximale de fonctionnement du système.

12. Procédé selon les revendications 10 et 11 **caractérisé en outre par** la recherche de chaque puce dudit code d'accès après ladite durée prédéterminée.

13. Procédé selon la revendication 11 **caractérisé en ce que** ledit code court est une partie dudit code d'accès.

14. Procédé selon les revendications 1 à 13 **caractérisé en outre, par** la détection, au niveau de ladite station de base (14), de la phase correcte dudit code court (162) lorsque ledit code court atteint une puissance suffisante pour la détection par ladite station de base (14).

15. Réseau de communication entre une station de base (14) et au moins une unité d'abonné (16), les station de base (14) et unité d'abonné (16) possédant toutes deux des moyens d'émission (50, 72) et de détection (52, 74) de signaux, le réseau comportant un système de commande de la puissance initiale **caractérisé en ce que** :
ladite unité d'abonné (16) comprend :
des moyens (74) d'émission, de manière sélective, d'un code court à un niveau de puissance d'émission sélectionné ;
des moyens (78) de détection d'un signal de confirmation provenant de ladite station de base (14) ; et
des moyens de commande (74), répondant audit moyen de détection (78), permettant de faire varier ledit niveau de puissance d'émission ; dans lequel ledit moyen de commande (74) augmente ledit niveau de puissance d'émission à une première vitesse avant la réception d'un signal de confirmation ;
des moyens (74) d'arrêt de l'émission du code court et d'émission d'un code d'accès qui est plus long que ledit code court à une seconde vitesse inférieure à ladite première vitesse lorsque ledit signal de confirmation est reçu ; et
des moyens (78) d'arrêt de l'augmentation de l'élévation de la puissance d'émission à la seconde vitesse d'élévation, en réponse à la réception d'un signal d'accusé de réception ; et
**en ce que** ladite station de base (14) comprend :
des moyens de détection (62) dudit code court ;
des moyens (66), répondant audit moyen de détection (62), d'émission dudit signal de confirmation vers ladite unité d'abonné (16) lorsque ledit code court est détecté ; et
des moyens (62). de détection dudit code d'accès et d'émission du signal d'accusé de réception.

16. Réseau selon la revendication 15 **caractérisé en ce que** ledit code accès est initialement émis à un niveau de puissance inférieur au niveau de puissance requis pour la détection par ladite station de base (14).

17. Réseau selon les revendications 15 et 16 **caractérisé en ce que** ladite première vitesse est égale à environ 1,0 dB/ms et **en ce que** ladite seconde vitesse est égale à environ 0,05 dB/ms.

18. Réseau selon les revendications 15 à 17 **caractérisé en ce que** ledit code court est une partie dudit code d'accès.

19. Réseau selon les revendications 15 à 18 **caractérisé en ce que** la période dudit code d'accès est un multiple pair de la période dudit code court.

20. Réseau selon les revendications 15 à 18 **caractérisé en ce que** le début dudit code d'accès est synchronisé avec le début dudit code court.

21. Réseau selon les revendications 15 à 20 **caractérisé en ce que** ledit moyen de détection (78) de la station de base détecte ledit code d'accès et recherche le début dudit code d'accès.

22. Réseau selon les revendications 15 à 21 **caractérisé en ce que** lesdits code court et code d'accès comprennent une pluralité de puces et **en ce que** ledit moyen de détection (78) de la station de base recherche chaque Nième puce dudit code d'accès ; et où N est le nombre de puces dans ledit code court.

23. Réseau selon la revendication 22 **caractérisé en ce que** ledit moyen de détection (78) de la station de base arrête de rechercher chaque Nième puce, après une durée prédéterminée, lorsque le début dudit code d'accès n'a pas été déterminé.

24. Réseau selon la revendication 23 **caractérisé en ce que** la durée prédéterminée est équivalente au temps nécessaire à un aller-retour d'un signal envoyé à une unité d'abonné (16) dans la plage maximale de fonctionnement du système.

25. Réseau selon les revendications 15 à 24 **caractérisé en ce que** la station de base (14) comporte en outre un moyen (72) de détection de la phase correcte dudit code court lorsque ledit code d'accès atteint une puissance suffisante pour la détection.
